# EUROPEAN PATENT APPLICATION

(11) **EP 2 131 291 A2**
(43) Date of publication of application: **09.12.2009**
(21) Application number: 08019113.3
(22) Date of filing: 31.10.2008
(51) Int. Cl.: G06F 17/30, H04L 29/08

(54) **Web sharing system, client device, and web sharing method used for the same**

(30) Priority: 07.11.2007 JP 2007289135
(71) Applicant: Nec Corporation, Tokyo 108-8001 (JP)
(72) Inventor: Suzuki, Seiji, Tokyo (JP)
(74) Representative: Glawe, Delfs, Moll

(57) **Abstract**

Multiple client devices which enable operation of a Web browser thereon each include a relaying client for rewriting, between the Web browser and a network, the URL of a Web page requested by the Web browser to description for obtaining the Web page via a Web sharing server. A web sharing server for causing a Web page to be shared by the client devices via the network retrieves the Web page requested by the Web browser based on the URL rewritten by the relaying client, and delivers the retrieved Web page to the Web browsers of the client devices that belong to the same group.

## Description

### INCORPORATION BY REFERENCE

This application is based upon and claims the benefit of priority from Japanese patent application No.2007-289135, filed on November 7, 2007, the disclosure of which is incorporated herein in its entirety by reference.

### BACKGROUND OF THE INVENTION

### Field of the Invention

The present invention relates to a Web sharing system, a client device, and a Web sharing method used for them. More particularly, the invention relates to a method for users to share the same Web page.

### Description of the Related Art

Many of Web conference or consulting systems adopt means of enabling remote users to share the same Web page in real time.

However, the structure of Web pages has become increasingly complex in these years and the Uniform Resource Locator (URL) of a page as the target of transition is often embedded in an external object such as flash. URLs themselves are also becoming longer as networks grow in size, which has lead to increased use of a function for storing frequently visited Web sites (hereinafter referred to as "favorite" function) in order to manage necessary URLs.

In real-time Web sharing systems that pertain to the present invention, such circumstances make it more difficult to share a certain Web page promptly or to correctly share a URL embedded in a Web page.

When dedicated Web browsers are utilized, a technique pertaining to the present invention enables user actions to be shared between the browsers by rewriting in a browser a URL contained in the contents of a downloaded Web page to the address of a sharing management server which controls synchronization of Web pages.

Meanwhile, when generic Web browsers are utilized, an access is made to a Web page via a relaying server and a URL contained in the contents of a Web page is rewritten by the relaying server so as to enable sharing of user actions between the browsers.

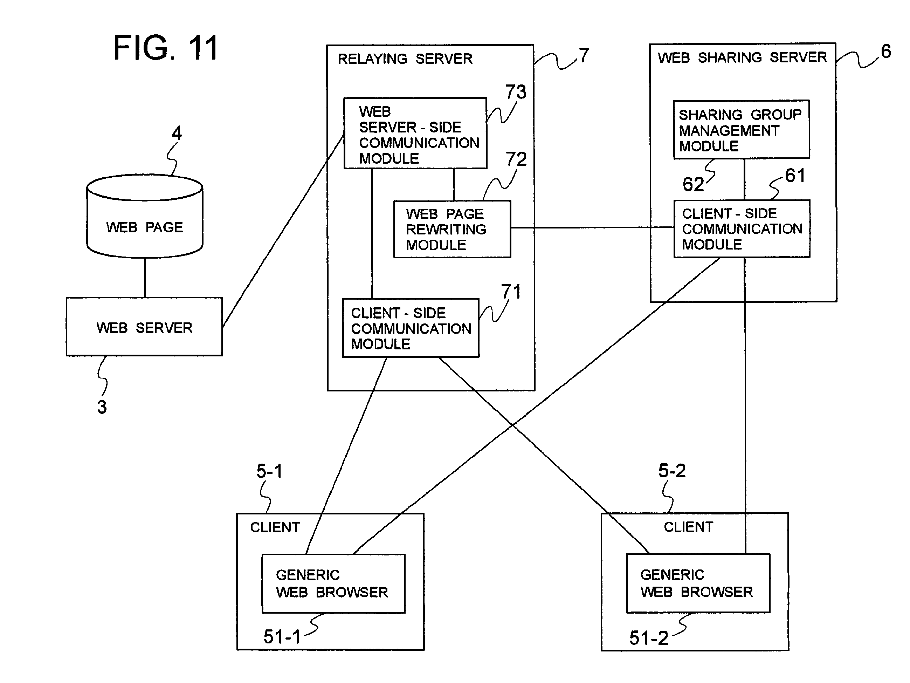

An example of utilization of generic Web browsers will be described with reference to FIGS. 11 to 13. In FIG. 11, a real-time Web sharing system pertaining to the present invention includes a Web server 3, a Web page 4, a relaying server 7, a Web sharing server 6, and clients 5-1 and 5-2.

The relaying server 7 includes a client-side communication module 71, a Web page rewriting module 72, and a Web server-side communication module 73. The Web sharing server 6 includes a client-side communication module 61 and a sharing group management module 62. The clients 5-1 and 5-2 have installed thereon generic Web browsers 51-1 and 51-2, respectively.

With a technique pertaining to the present invention, the Web page 4 is accessed via the relaying server 7 utilizing the generic Web browsers 51-1 and 51-2 installed on the clients 5-1 and 5-2. The relaying server 7 enables sharing of user actions between the generic Web browsers 51-1 and 51-2 by rewriting a URL contained in the contents of the Web page 4 to the address of the Web sharing server 6 which controls synchronization of the Web page 4.

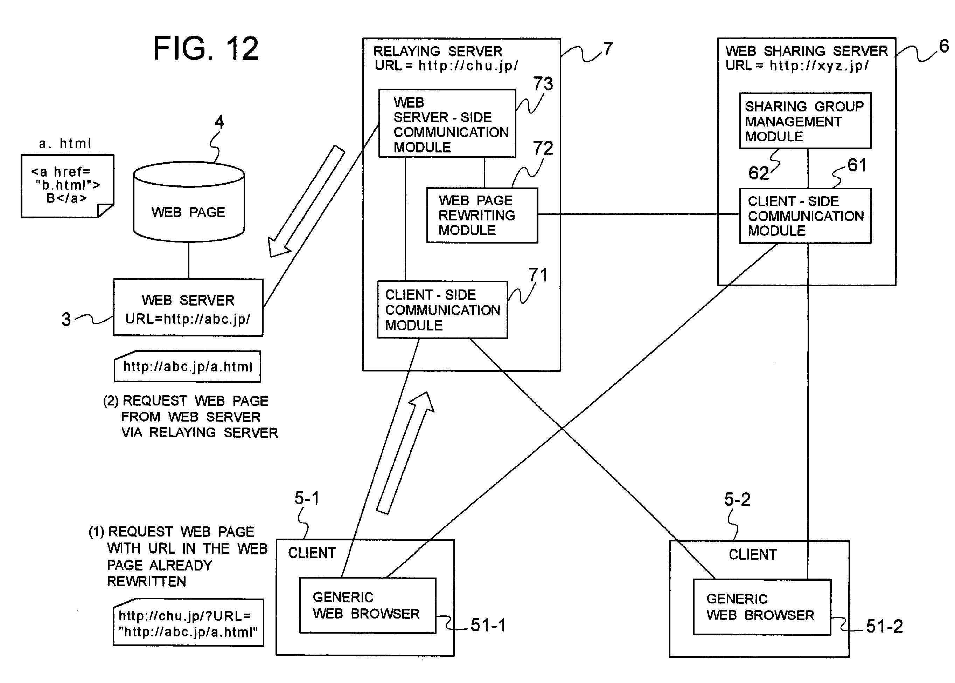

That is to say, when a Web page is requested on the generic Web browser 51-1 of the client 5-1 with a URL in the Web page already rewritten so that the request is routed through the relaying server 7 (see FIG. 12(1)), the request is made to the Web server 3 via the relaying server 7 (see FIG. 12(2)).

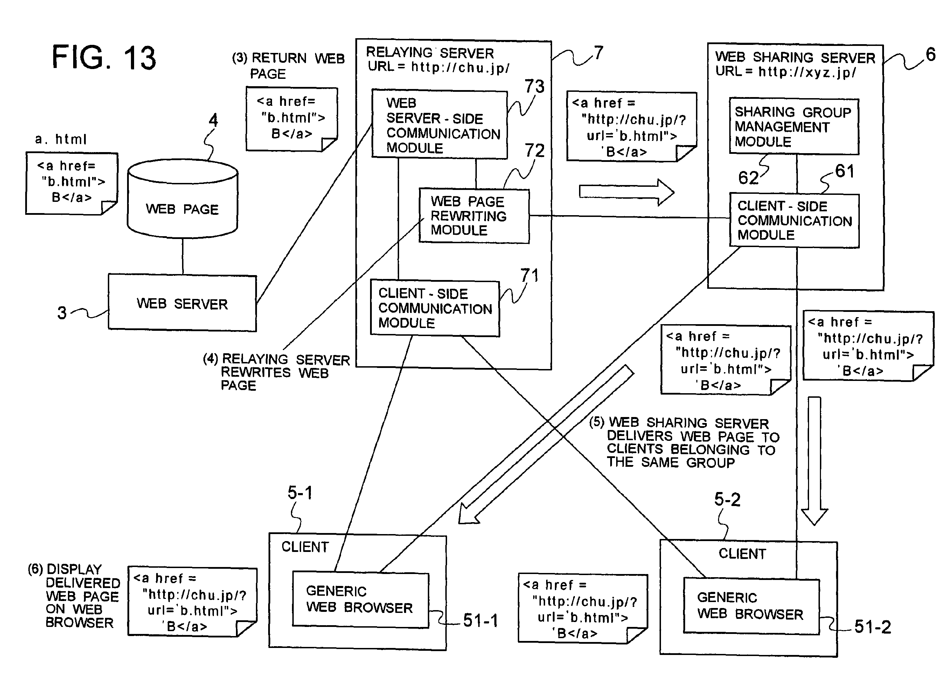

The Web server 3 returns the requested Web page to the relaying server 7 (see FIG. 13(3)). On the relaying server 7, the Web page rewriting module 72 rewrites the URL in the Web page returned from the Web server 3 so that the Web page is routed through the relaying server 7 (see FIG. 13(4)) and passes the Web page to the Web sharing server 6. The Web sharing server 6 delivers the Web page that has been rewritten by the relaying server 7 to the clients 5-1 and 5-2 that belong to the same group (see FIG. 13(5)).

The clients 5-1 and 5-2 display the Web page delivered from the Web sharing server 6 on the generic Web browsers 51-1 and 51-2, respectively (see FIG. 13(6)). Through such a process, the technique pertaining to the present invention enables sharing of user actions between the generic Web browsers 51-1 and 51-2.

Such real-time Web sharing systems include ones described in patent documents listed below. Japanese Patent Laid-Open No. 2005-149387 describes a system for preventing multiple accesses to a Web server during execution of real-time Web sharing. Japanese Patent Laid-Open No. 2004-094928 describes a Web server that enables synchronized viewing of the same Web page among a number of clients. Japanese Patent Laid-Open No. 2006-018795 describes a system that makes a Web browser continuously access a relaying server.

However, with the above-mentioned technique pertaining to the present invention, it is impossible to rewrite a URL in a dedicated browser or on a relaying server when the URL is directly specified in an external object contained in a Web page. Thus, the technique has a problem that generic Web browsers cannot share a Web page transition that is made via an external object.

In addition, with the technique pertaining to the present invention, a relaying server is not passed through when transition to a Web page is made by directly specifying a URL on a generic Web browser or made directly from "favorite" function generally provided in generic Web browsers (e.g., bookmark or the like). Thus, the URL is not rewritten and transition to the Web page cannot be shared. These problems cannot be solved by the techniques described in the above-mentioned patent documents either.

### SUMMARY

An exemplary object of the present invention is to solve the above problems by providing a Web sharing system, a client device, and a Web sharing method used for them that enable sharing of a Web page among clients belonging to the same sharing group even when a URL is directly specified in an external object contained in a Web page, or when a URL is directly specified on a generic Web browser, or when a URL is specified directly from "favorite" function (e.g., bookmark or the like), which is generally provided on generic Web browsers.

A Web sharing system according to an exemplary aspect of the present invention is a Web sharing system including a plurality of client devices which enable operation of a Web browser thereon and a Web sharing server for causing a Web page to be shared between the client devices via a network, wherein each of the plurality of client devices includes a relaying client for rewriting, between the Web browser and the network, a Uniform Resource Locator (URL) of a Web page requested by the Web browser to description for obtaining the Web page via the Web sharing server, and the Web sharing server retrieves the Web page requested by the Web browser based on the URL rewritten by the relaying client and delivers the retrieved Web page to the Web browsers of the client devices that belong to a same group.

A client device according to an exemplary aspect of the present invention is a client device that shares a Web page delivered from a Web sharing server with another client device via a network and that enables operation of a Web browser thereon, the client device including a relaying client for rewriting, between the Web browser and the network, a Uniform Resource Locator (URL) of a Web page requested by the Web browser to description for obtaining the Web page via the Web sharing server.

A Web sharing method according to an exemplary aspect of the present invention is a Web sharing method for use in a system that includes a plurality of client devices which enable operation of a Web browser thereon and a Web sharing server for causing a Web page to be shared between the client devices via a network, the method including:
rewriting, between the Web browser and the network, a Uniform Resource Locator (URL) of a Web page requested by the Web browser to description for obtaining the Web page via the Web sharing server; and
retrieving by the Web sharing server the Web page requested by the Web browser based on the rewritten URL and delivering the retrieved Web page to the Web browsers of the client devices that belong to the same group.

A recording medium according to an exemplary aspect of the present invention is a recording medium having recorded thereon a program to be executed by a central processing unit within a client device in a system that includes a plurality of client devices which enable operation of a Web browser thereon and a Web sharing server for causing a Web page to be shared between the client devices via a network, the program including a process of rewriting, between the Web browser and the network, a Uniform Resource Locator (URL) of a Web page requested by the Web browser to description for obtaining the Web page via the Web sharing server.

### BRIEF DESCRIPTION OF THE DRAWINGS

FIG. 1 is a block diagram showing an exemplary configuration of a real-time Web sharing system according to a first exemplary embodiment of the present invention;
FIG. 2 is a sequence chart illustrating the operation of the real-time Web sharing system according to the first exemplary embodiment of the present invention;
FIG. 3 is a block diagram showing an example of a more detailed configuration of the real-time Web sharing system according to the first exemplary embodiment of the present invention;
FIG. 4 is a block diagram showing an exemplary configuration of a relaying client of FIG. 3;
FIG. 5 illustrates URL rewriting operation performed by an address rewriting unit of FIG. 4;
FIG. 6 illustrates the operation of the real-time Web sharing system according to the first exemplary embodiment of the present invention;
FIG. 7 illustrates the operation of the real-time Web sharing system according to the first exemplary embodiment of the present invention;
FIG. 8 illustrates the operation of the real-time Web sharing system according to the first exemplary embodiment of the present invention;
FIG. 9 illustrates the operation of the real-time Web sharing system according to the first exemplary embodiment of the present invention;
FIG. 10 is a block diagram showing an example of a more detailed configuration of a real-time Web sharing system according to a second exemplary embodiment of the present invention;
FIG. 11 is a block diagram showing an exemplary configuration of a real-time Web sharing system that pertains to the present invention;
FIG. 12 illustrates the operation of the real-time Web sharing system that pertains to the present invention; and
FIG. 13 illustrates the operation of the real-time Web sharing system that pertains to the present invention.

### EXEMPLARY EMBODIMENT

Now, exemplary embodiments of the present invention will be described with reference to drawings. First, as an example of the Web sharing system according to the exemplary embodiments of the invention, a real-time Web sharing system in which remote users share the same Web page in real time will be described. However, the present invention is not limited to this real-time Web sharing system.

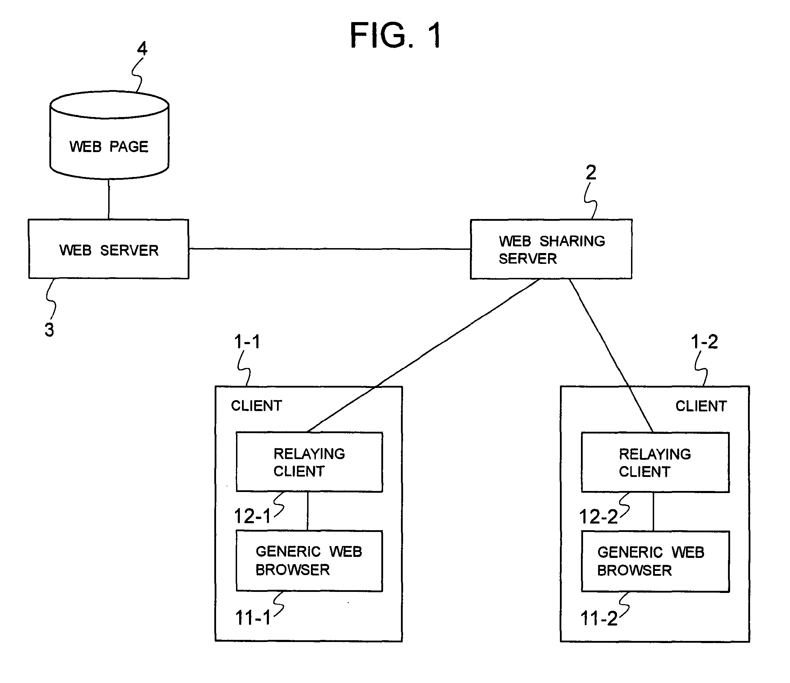

FIG. 1 is a block diagram showing an exemplary configuration of the real-time Web sharing system according to a first exemplary embodiment of the invention. In FIG. 1, the real-time Web sharing system according to the first exemplary embodiment of the invention includes a Web server 3, a Web page 4, a Web sharing server 2, and clients 1-1 and 1-2. The clients 1-1 and 1-2 have installed thereon generic Web browsers 11-1, 11-2 and relaying clients 12-1, 12-2, respectively.

The clients 1-1 and 1-2 are connected to a network not shown and utilized by users for viewing Web pages. The generic Web browsers 11-1 and 11-2 are software running on the clients 1-1 and 1-2 for viewing Web pages. The relaying clients 12-1 and 12-2 are one of software, firmware, and hardware that runs on the clients 1-1 and 1-2 for address rewriting and/or other operations between the network and the Web browsers 11-1, 11-2.

The Web sharing server 2 is connected to the network and delivers the same Web page to the clients 1-1 and 1-2 that belong to the same sharing group. The Web server 3 is connected to the network and returns the Web page 4 via the network in response to a request for a Web page. The Web page 4 is managed on the Web server 3.

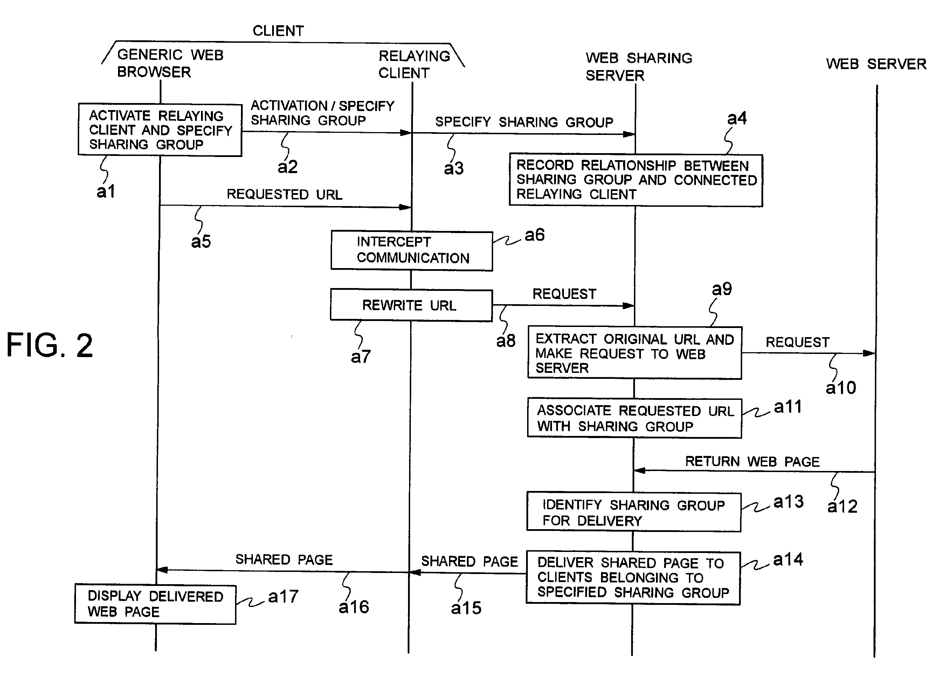

FIG. 2 is a sequence chart illustrating the operation of the real-time Web sharing system according to the first exemplary embodiment of the invention. With reference to FIGS. 1 and 2, the operation of the real-time Web sharing system according to the first exemplary embodiment of the invention is described. FIG. 2 is described by illustrating a case where the client 1-1 retrieves the Web page 4 from the Web server 3. Processing by the relaying client 12-1 shown in FIG. 2 is realized by a control unit (a central processing unit or CPU) within the client 1-1 executing a program.

When the user of the client 1-1 activates the relaying client 12-1, the relaying client 12-1 first starts communication with the Web sharing server 2 and specifies to the Web sharing server 2 the sharing group to which the client 1-1 belongs (a1 to a3 in FIG. 2). The Web sharing server 2 records the communication with the relaying client 12-1 and the sharing group to which the client 1-1 belongs in association with each other (a4 in FIG. 2).

Although FIG. 2 shows that activation of the relaying client 12-1 and specification of the sharing group to which the client 1-1 belongs are made from the generic Web browser 11-1, the relaying client 12-1 may automatically specify to the Web sharing server 2 the sharing group to which the client 1-1 belongs when the relaying client 12-1 is activated, in other than the specification from the generic Web browser 11-1.

Similarly, when the client 1-2 also activates the relaying client 12-2, the relaying client 12-2 starts communication with the Web sharing server 2 and specifies to the Web sharing server 2 the sharing group to which the client 1-2 belongs. As a result, the Web sharing server 2 associates the communication to the relaying client 12-2 with the sharing group to which the client 1-2 belongs.

While the relaying client 12-1 is activated, the relaying client 12-1 intercepts all communication from the generic Web browser 11-1 to the network (a5 and a6 in FIG. 2). The relaying client 12-1 rewrites a URL (Uniform Resource Locator) written in intercepted communication to contents that can be processed by the Web sharing server 2 and transfers it to the Web sharing server 2 (a7 in FIG. 2).

The URL requested on the generic Web browser 11-1 is rewritten on the relaying client 12-1 and transferred to the Web sharing server 2 (a8 in FIG. 2). The Web sharing server 2 extracts the original URL from the rewritten URL and makes a request again to the Web server 3 (a9 and a10 in FIG. 2). The Web sharing server 2 also extracts the specified sharing group from the rewritten URL and records it in association with the original URL (a11 in FIG. 2).

The Web server 3 returns the Web page 4 requested with the URL to the Web sharing server 2 (a12 in FIG. 2). The Web sharing server 2 retrieves the sharing group that is associated with the URL of the returned Web page 4 as well as connection with the client associated with that sharing group to identify where the returned Web page 4 should be delivered (a13 in FIG. 2).

The Web sharing server 2 delivers the Web page 4 to the clients 1-1 and 1-2 that belong to the sharing group (a14 in FIG. 2). On the clients 1-1 and 1-2, the relaying clients 12-1 and 12-2 receive the Web page 4 and transfer it to the generic Web browsers 11-1 and 11-2 as it is (a15 and a16 in FIG. 2).

The generic browsers 11-1 and 11-2 simultaneously display the Web page 4 in the same condition as when returned from the Web server 3 so as to share the Web page 4 in real time (a17 in FIG. 2).

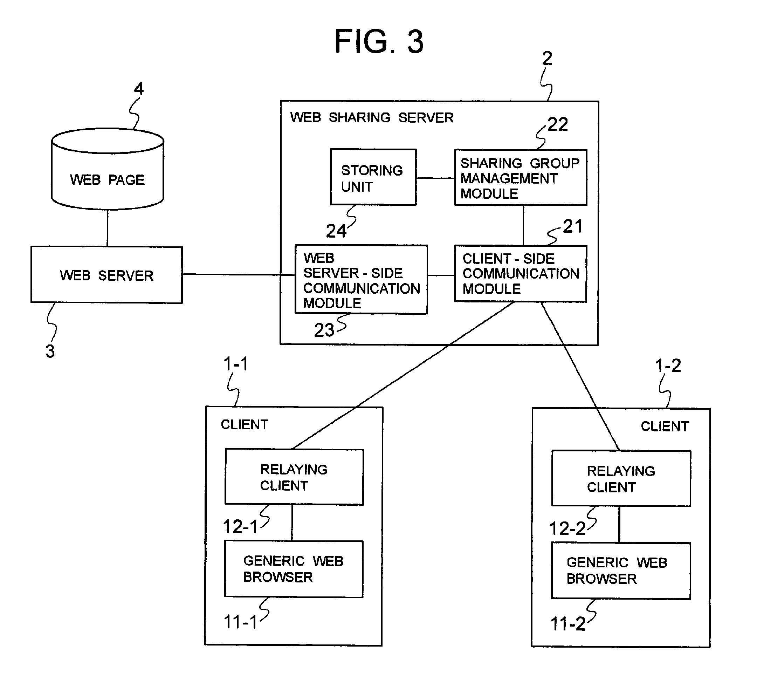

FIG. 3 is a block diagram showing an example of the more detailed configuration of the real-time Web sharing system according to the first exemplary embodiment of the invention. FIG. 3 shows the internal configuration of the Web sharing server 2. The Web sharing server 2 includes a client-side communication module 21, a sharing group management module 22, a Web server-side communication module 23, and a storing unit 24.

The client-side communication module 21 operates on the Web sharing server 2 and communicates with the clients 1-1 and 1-2 over a network not shown. The sharing group management module 22 operates on the Web sharing server 2 to manage the sharing group to which the clients 1-1 and 1-2 belong.

The Web server-side communication module 23 operates on the Web sharing server 2 to communicate with the Web server 3 over the network. The storing unit 24 stores information on the sharing group managed by the sharing group management module 22 and/or other information. The clients 1-1, 1-2 and the Web server 3 perform similar operations to those described in FIG. 1.

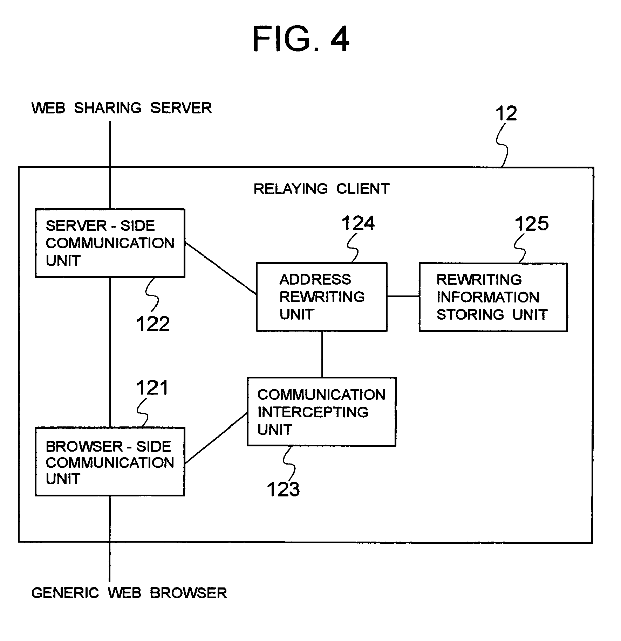

FIG. 4 is a block diagram showing an exemplary configuration of the relaying clients 12-1 and 12-2 of FIG. 3. In FIG. 4, the relaying client 12 includes a browser-side communication unit 121, a server-side communication unit 122, a communication intercepting unit 123, an address rewriting unit 124, and a rewriting information storing unit 125.

The browser-side communication unit 121 performs communication with the generic Web browsers 11-1 and 11-2. The browser-side communication unit 121 also sends a URL received from the generic Web browsers 11-1 and 11-2 to the server-side communication unit 122.

The communication intercepting unit 123 sends a URL from the generic Web browsers 11-1 and 11-2 received by the browser-side communication unit 121 to the address rewriting unit 124 when the relaying client 12 is activated. The address rewriting unit 124 rewrites the URL from the communication intercepting unit 123 to contents that can be processed by the Web sharing server 2 based on information prestored in the rewriting information storing unit 125 and sends the URL to the server-side communication unit 122. The server-side communication unit 122 sends the URL rewritten by the address rewriting unit 124 to the Web sharing server 2 when the relaying client 12 is activated.

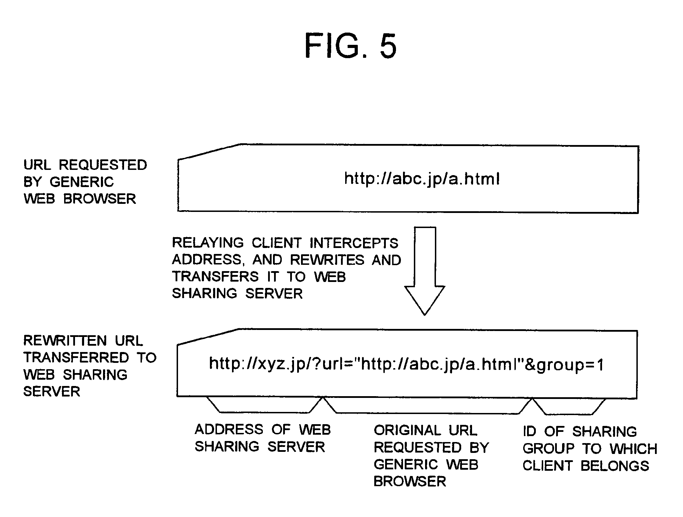

FIG. 5 illustrates a URL rewriting operation performed by the address rewriting unit 124 of FIG. 4. In FIG. 5, when the URL requested by the generic Web browsers 11-1 and 11-2 is "http://abc.jp/a.html ", for instance, the address rewriting unit 124 rewrites it to a URL made up of "the address of the Web sharing server (http://xyz.jp/)" + "the original URL requested by the generic Web browser (url="http://abc.jp/a.html")" + "the ID of the sharing group to which the client belongs (group=1)".

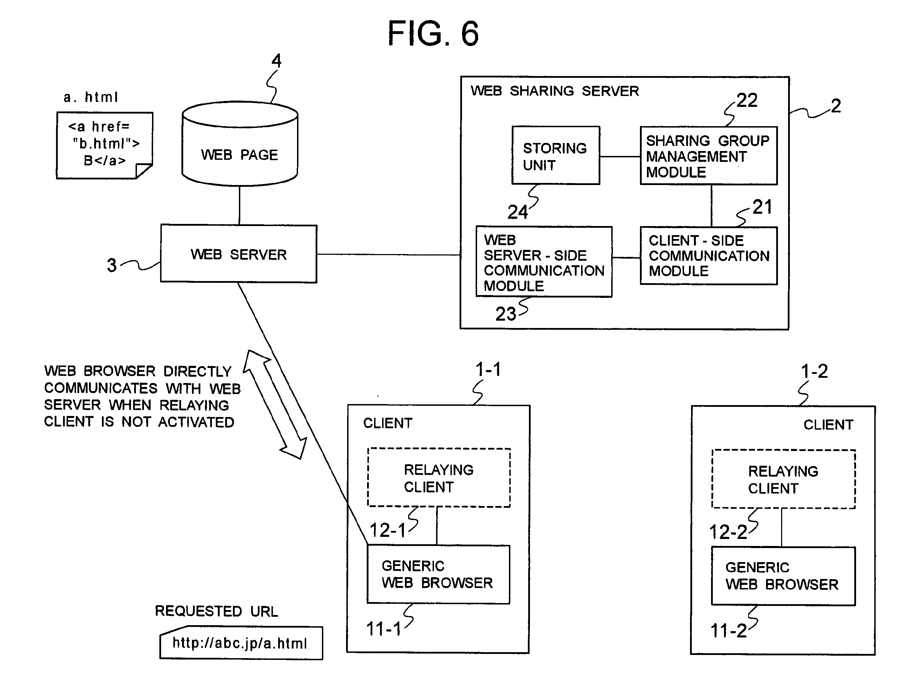

FIGS. 6 through 9 show the operation of the real-time Web sharing system according to the first exemplary embodiment of the invention. Referring to FIGS. 3 to 9, the operation of the real-time Web sharing system according to the first exemplary embodiment of the invention will be described. The real-time Web sharing system shown in FIG. 3 is a system for enabling sharing of a certain Web page requested by the generic Web browser 11-1 or 11-2.

When the relaying clients 12-1 and 12-2 are not activated, the Web page 4 is unsharable and the generic Web browser 11-1 directly communicates with the Web server 3 and retrieves the Web page 4 to make it available for viewing. In this condition, a Web page from a Web server (not shown) that is completely separate from the Web server 3 can be viewed on the generic Web browser 11-2 (see FIG. 6).

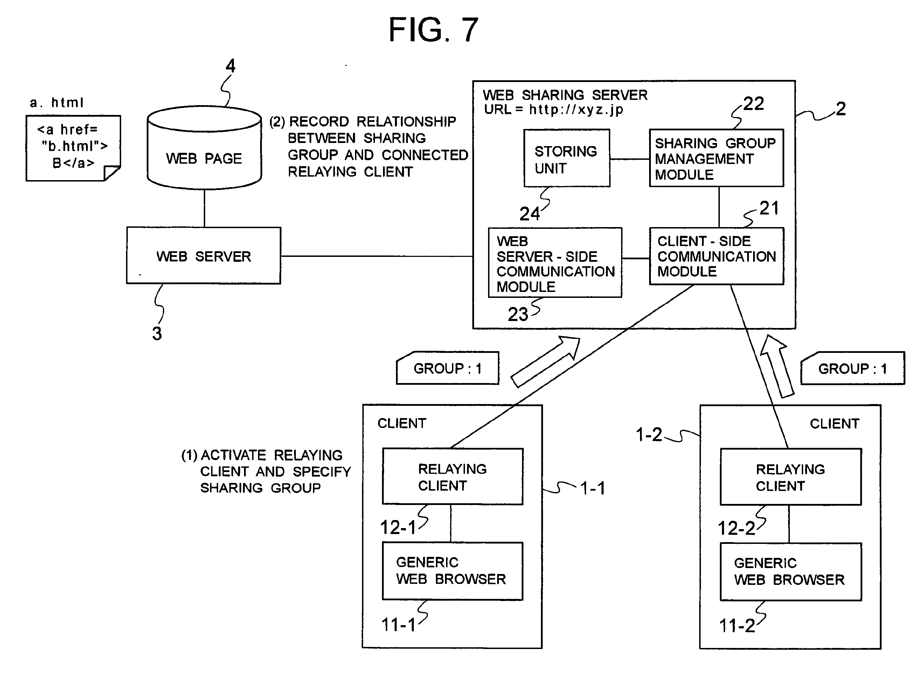

When the user of the client 1-1 activates the relaying client 12-1, the relaying client 12-1 first starts communication with the client-side communication module 21 of the Web sharing server 2 and specifies to the Web sharing server the sharing group to which the client 1-1 belongs (in the present example, group 1) (see FIG. 7(1)). On the Web sharing server 2, the sharing group management module 22 records the communication with the relaying client 12-1 and the sharing group to which the client 1-1 belongs in association with each other in the storing unit 24 (see FIG. 7(2)).

Similarly, when the user of the client 1-2 activates the relaying client 12-2, the relaying client 12-2 communicates with the client-side communication module 21 and specifies the sharing group to which the client 1-2 belongs (in the present example, group 1). Consequently, on the Web sharing server 2, the sharing group management module 22 records the communication with the relaying client 12-2 and the sharing group to which the client 1-2 belongs in association with each other in the storing unit 24.

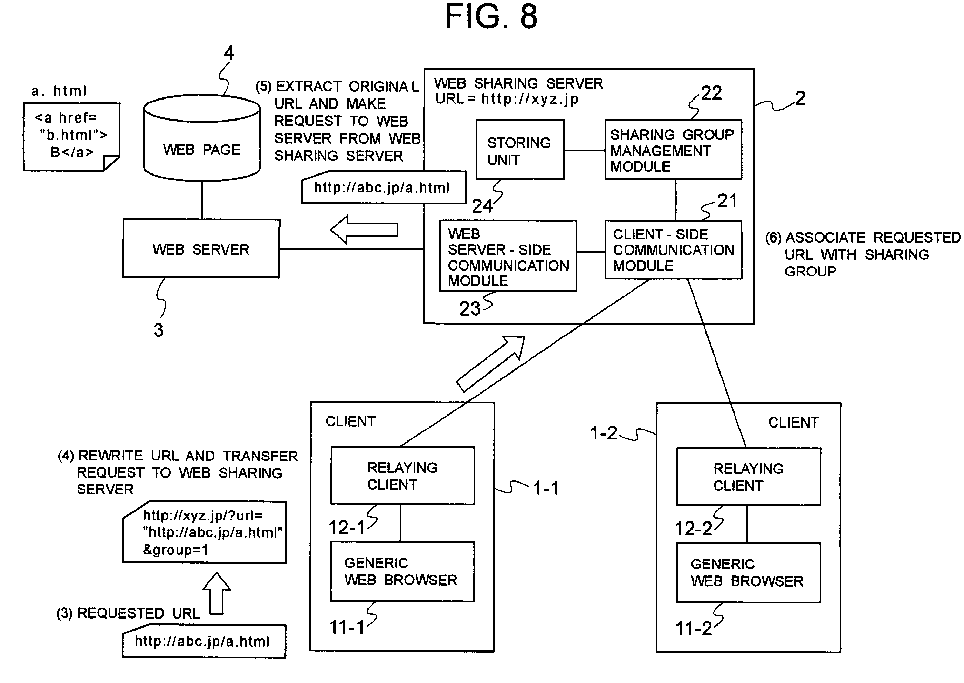

While the relaying client 12-1 is activated, the relaying client 12-1 intercepts all communication from the generic Web browser 11-1 to the network by way of the communication intercepting unit 123. On the relaying client 12-1, the address rewriting unit 124 rewrites a URL (a requested URL) (see FIG. 8(3)) written in communication intercepted by the communication intercepting unit 123 to contents that can be processed by the Web sharing server 2 (see FIG. 5) and the contents is transferred to the Web sharing server 2 (see FIG. 8(4)).

The URL requested on the generic Web browser 11-1 is rewritten at the relaying client 12-1 and transferred to the client-side communication module 21 of the Web sharing server 2.

The Web sharing server 2 extracts the original URL from the rewritten URL and makes a request again to the Web server 3 via the Web server-side communication module 23 (see FIG. 8(5)). The Web sharing server 2 also extracts the specified sharing group from the rewritten URL, and the sharing group management module 22 records it in the storing unit 24 in association with the original URL (see FIG. 8(6)).

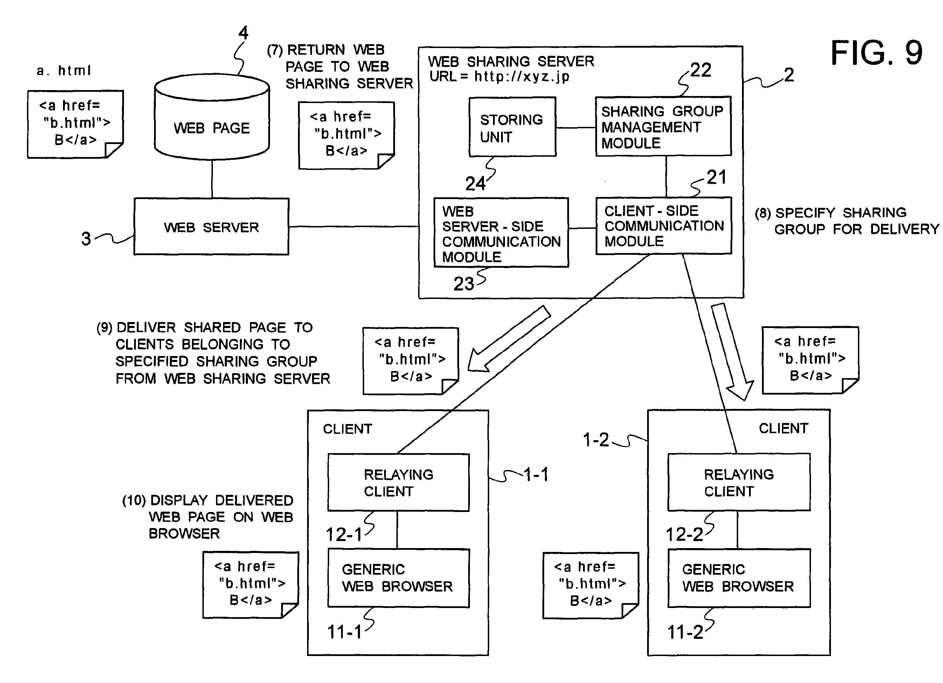

The Web server 3 returns the Web page 4 requested with the URL to the Web server-side communication module 23 (see FIG. 9(7)). On the Web sharing server 2, the sharing group management module 22 retrieves a sharing group associated with the URL of the returned Web page 4 from the storing unit 24 and also retrieves the connection with a client that is associated with that sharing group from the storing unit 24 to identify the destination to which information in the returned Web page 4 should be delivered (see FIG. 9 (8)).

The Web sharing server 2 delivers the Web page 4 to the clients 1-1 and 1-2 belonging to the sharing group via the client-side communication module 21 (see FIG. 9(9)). On the clients 1-1 and 1-2, the relaying clients 12-1 and 12-2 receive the Web page 4 and transfer it to the generic Web browsers 11-1 and 11-2 as it is.

The generic Web browsers 11-1 and 11-2 simultaneously display the Web page 4 in the same condition as when returned from the Web server 3 (see FIG. 9(10)) so as to share the Web page 4 in real time between the browsers 11-1 and 11-2.

This exemplary embodiment further implements the relaying clients 12-1 and 12-2 in the clients 1-1 and 1-2 in which the generic Web browsers 11-1 and 11-2 are implemented and the relaying clients 12-1 and 12-2 intercept all communication from the generic Web browsers 11-1 and 11-2 to the network and rewrite a URL requested by the generic Web browsers 11-1 and 11-2.

In this exemplary embodiment, therefore, a Web page can be shared between the clients 1-1 and 1-2 belonging to the same sharing group via the relaying clients 12-1, 12-2 and the Web sharing server 2 even when a URL is directly specified in an external object contained in a Web page, or when a URL is directly specified on a generic Web browser, or when a URL is directly specified from "favorite" function of a generic Web browser.

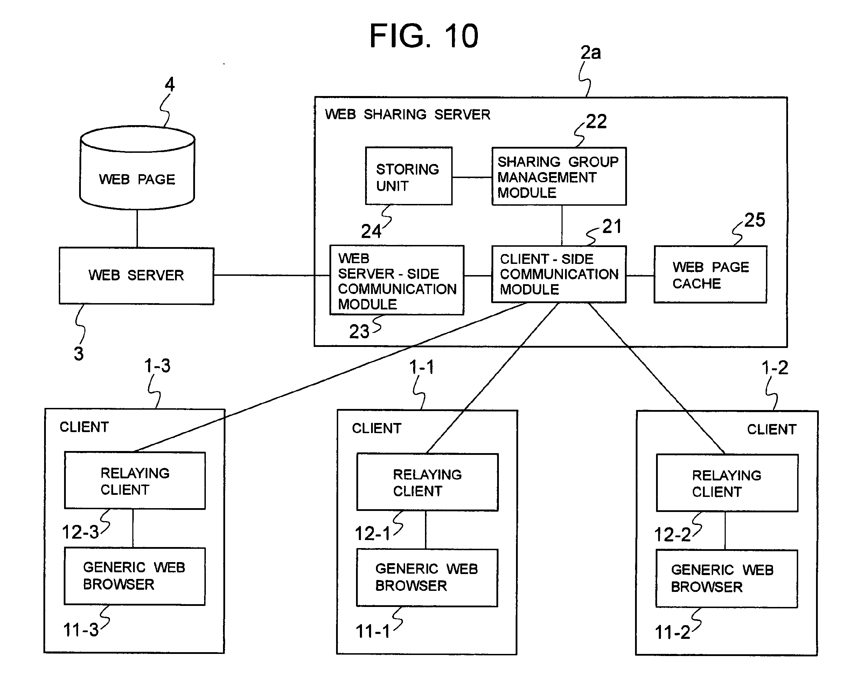

FIG. 10 is a block diagram showing an example of a more detailed configuration of the real-time Web sharing system according to a second exemplary embodiment of the invention. In FIG. 10, except for provision of a Web page cache 25 on the Web sharing server 2a, the real-time Web sharing system according to the second exemplary embodiment of the invention has a similar configuration to that of the real-time Web sharing system according to the first exemplary embodiment of the invention shown in FIG. 3. The same components are denoted with the same reference numerals.

The Web sharing server 2a temporarily saves the contents of the Web page 4 in the Web page cache 25 when the Web page 4 is delivered to the clients 1-1 and 1-2 via the client-side communication module 21, and the sharing group management module 22 records the Web page 4 in association with the sharing group to which the clients 1-1 and 1-2 belong in the storing unit 24.

When the clients 1-1 and 1-2 are already sharing a certain Web page in real time, if a third client 1-3 activates the relaying client 12-3 and specifies the same sharing group as the clients 1-1 and 1-2, the Web sharing server 2 associates the relaying client 12-3 with the same sharing group as the relaying clients 12-1 and 12-2 and has the sharing group management module 22 record the association in the storing unit 24.

The Web sharing server 2 then retrieves the temporarily stored Web page 4 associated with the specified sharing group from the Web page cache 25, and sends the page to the relaying client 12-3. The relaying client 12-3 receives the Web page 4 and transfers it to the generic Web browser 11-3 as it is.

Consequently, in this exemplary embodiment, even the generic Web browser 11-3 which participates in sharing in midstream can share the Web page 4 in the same condition as on the Web browsers 11-1 and 11-2 in real time.

As described above, the first and second exemplary embodiments provide a system for sharing the Web page 4 among multiple clients 1-1 to 1-3 in real time by providing the relaying clients 12-1 to 12-3 between the generic Web browsers 11-1 to 11-3 and the network and rewriting a URL specified by any of the generic Web browsers 11-1 to 11-3 on the relaying clients 12-1 to 12-3, instead of rewriting the contents of the Web page 4. Thus, the Web page 4 can be shared by the multiple clients 1-1 to 1-3 without being aware of a URL specified by a user.

The present invention is applicable to a Web conference system, Web consulting system, video conference system, or other remote conference system utilizing a computer connected to a network system in which the same Web page on the network is simultaneously displayed on multiple Web browsers.

The present invention provides an exemplary advantage of enabling a Web page to be shared among clients belonging to the same sharing group even when a URL is directly specified in an external object contained in a Web page, or when a URL is directly specified on a generic Web browser, or when a URL is specified directly from "favorite" function (e.g., bookmark or the like), which is generally provided on generic Web browsers.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

## Claims

1. A Web sharing system comprising a plurality of client devices which enable operation of a Web browser thereon and a Web sharing server for causing a Web page to be shared between the client devices via a network, wherein each of the plurality of client devices comprises a relaying client for rewriting, between the Web browser and the network, a Uniform Resource Locator (URL) of a Web page requested by the Web browser to description for obtaining the Web page via the Web sharing server, and the Web sharing server retrieves the Web page requested by the Web browser based on the URL rewritten by the relaying client and delivers the retrieved Web page to the Web browsers of the client devices that belong to a same group.

2. The Web sharing system according to claim 1, wherein the relaying client rewrites the URL requested by the Web browser to contents that can be processed by the Web sharing server.

3. The Web sharing system according to claim 2, wherein the relaying client rewrites the URL requested by the Web browser to a URL including the address of the Web sharing server, the original URL requested by the Web browser, and identification information for a sharing group to which the client device belongs, and the Web sharing server extracts the original URL requested by the Web browser from the URL rewritten by the relaying client to retrieve the Web page requested by the Web browser.

4. The Web sharing system according to any one of claims 1 to 3, wherein the client device rewrites the URL requested by the Web browser when the relaying client is activated, and transfers the URL requested by the Web browser directly to a Web server when the relaying client is deactivated.

5. The Web sharing system according to any one of claims 1 to 4, wherein the Web sharing server includes cache means for temporarily keeping a Web page when the Web page is being shared between the client devices, and transmits the Web page kept in the cache means to a client device that has newly participated in sharing of the Web page.

6. A client device that shares a Web page delivered from a Web sharing server with another client device via a network and that enables operation of a Web browser thereon, the client device comprising a relaying client for rewriting, between the Web browser and the network, a Uniform Resource Locator (URL) of a Web page requested by the Web browser to description for obtaining the Web page via the Web sharing server.

7. The client device according to claim 6, wherein the relaying client rewrites the URL requested by the Web browser to contents that can be processed by the Web sharing server.

8. The client device according to claim 7, wherein the relaying client rewrites the URL requested by the Web browser to a URL including the address of the Web sharing server, the original URL requested by the Web browser, and identification information for a sharing group to which the client device belongs, and the Web page requested by the Web browser is obtained by the Web sharing server based on the rewritten URL and is delivered from the Web sharing server.

9. The client device according to any one of claims 6 to 8, wherein the client device rewrites the URL requested by the Web browser when the relaying client is activated, and transfers the URL requested by the Web browser directly to a Web server when the relaying client is deactivated.

10. A Web sharing method for use in a system that comprises a plurality of client devices which enable operation of a Web browser thereon and a Web sharing server for causing a Web page to be shared between the client devices via a network, the method comprising:
rewriting, between the Web browser and the network, a Uniform Resource Locator (URL) of a Web page requested by the Web browser to description for obtaining the Web page via the Web sharing server; and
retrieving by the Web sharing server the Web page requested by the Web browser based on the rewritten URL and delivering the retrieved Web page to the Web browsers of the client devices that belong to a same group.

11. The Web sharing method according to claim 10, wherein the URL requested by the Web browser is rewritten to contents that can be processed by the Web sharing server.

12. The Web sharing method according to claim 11, wherein the URL requested by the Web browser is rewritten to a URL including the address of the Web sharing server, the original URL requested by the Web browser, and identification information for a sharing group to which the client device belongs, and the Web sharing server extracts the original URL requested by the Web browser from the rewritten URL to retrieve the Web page requested by the Web browser.

13. The Web sharing method according to any one of claims 10 to 12, wherein the URL requested by the Web browser is rewritten when a URL rewriting process is activated and the URL requested by the Web browser is transferred directly to a Web server when the URL rewriting process is deactivated.

14. The Web sharing method according to any one of claims 10 to 13, wherein the Web sharing server includes cache means for temporarily keeping a Web page when the Web page is being shared between the client devices, and the Web sharing server transmits the Web page kept in the cache means to a client device that has newly participated in sharing of the Web page.

15. A recording medium having recorded thereon a program to be executed by a central processing unit within a client device in a system that comprises a plurality of client devices which enable operation of a Web browser thereon and a Web sharing server for causing a Web page to be shared between the client devices via a network, the program including a process of rewriting, between the Web browser and the network, a Uniform Resource Locator (URL) of a Web page requested by the Web browser to description for obtaining the Web page via the Web sharing server.
